# EUROPEAN PATENT APPLICATION

(11) **EP 4 207 448 A2**
(43) Date of publication of application: **05.07.2023**
(21) Application number: 22216208.3
(22) Date of filing: 22.12.2022
(51) Int. Cl.: H01M 50/204, H01M 50/507

(54) **BUS BAR HOLDER, BUS BAR ASSEMBLY, AND BATTERY MODULE**

(30) Priority: 30.12.2021 KR 20210193102
(71) Applicant: Samsung SDI Co., Ltd., Yongin-si, Gyeonggi-do 17084 (KR)
(72) Inventor: LIM, Dooyong, 17084 Yongin-si (KR)
(74) Representative: Marks & Clerk LLP

(57) **Abstract**

A bus bar holder for a battery module according to an embodiment of the present invention includes a body that includes a plurality of bus bar disposal area portions, and a hinge portion that is disposed between the plurality of bus bar disposal area portions to enable stacking of the plurality of bus bar disposal area portions.

## Description

### BACKGROUND OF THE INVENTION

### (a) Field of the Invention

The present invention relates to a bus bar holder, and more particularly, it relates to a bus bar holder of a battery module. In addition, the present invention relates to a bus bar assembly including a bus bar holder and a battery module including the bus bar assembly.

### (b) Description of the Related Art

A rechargeable battery is different from a primary battery in that the primary battery only converts chemical energy into electrical energy in a non-reversible manner, while the rechargeable battery can be charged and discharged repeatedly. A low-capacity rechargeable battery can be used as a power source for small electronic devices such as mobile phones, laptop computers, and camcorders, and a high-capacity rechargeable battery can be used as a power source for driving motors in hybrid and electric vehicles.

In general, a rechargeable battery includes an electrode assembly that includes a positive electrode, a negative electrode, and a separator disposed between the positive electrode and the negative electrode, a case that accommodates the electrode assembly, and an electrode terminal that is electrically connected to the electrode assembly. The case may be cylindrical or rectangular depending on the purpose of use, and an electrolyte solution is injected into the case such that the rechargeable battery can be charged and discharged through an electrochemical reaction of the positive electrode and the negative electrode.

A rechargeable battery may use a battery module formed of a plurality of unit batteries coupled in series to drive a motor of a hybrid vehicle that requires high energy density. That is, the battery module is formed by connecting electrode terminals of each of a plurality of unit batteries according to the amount of power required to drive the motor, thereby realizing a rechargeable battery having high power.

The battery cells of the battery module are generally connected by a bus bar. Since the main function of the bus bar is to electrically connect the battery cells of the battery module to each other in order to transmit a current between the cells between the battery modules, the bus bar is generally formed of a monolithic solid metal.

Meanwhile, in recent years, as a device to which the battery module is applied (e.g., an electric vehicle) expands, the battery module (or battery cell) also increases in size, while the battery module itself needs to be configured compactly.

For example, it is required to be configured such that not only the bus bar but also an electronic device (or electrical) parts connected to the bus bar can be supported by a holder and applied to the battery module.

The above information disclosed in this Background section is only for enhancement of understanding of the background of the invention, and therefore it may contain information that does not form the prior art that is already known to a person of ordinary skill in the art.

### SUMMARY OF THE INVENTION

One aspect of the present disclosure is to provide a bus bar holder that is easy to combine with a bus bar and/or electronic device parts by an improved structure.

Another aspect of the present invention is to provide a bus bar assembly including the bus bar holder, and a battery module including the bus bar assembly.

A bus bar holder for a battery module according to one aspect of the present invention includes: a body that includes a plurality of bus bar disposal area portions; and a hinge portion that is disposed between the plurality of bus bar disposal area portions to enable stacking of the plurality of bus bar disposal area portions.

The body and the hinge portion may be integrally formed.

An opening that exposes a bus bar terminal portion may be provided in each of the plurality of bus bar disposal area portions.

In a state in which the plurality of bus bar disposal area portions are stacked, each opening of the plurality of bus bar disposal area portions may overlap.

The hinge portion may extend along a length direction of the body.

A fastening portion for fixing the bus bar holder to the housing of the battery module adjacent to the hinge portion may be provided.

The hinge portion and the fastening portion may extend along a length direction of the body.

The hinge portion may include a first hinge portion connected to one of the plurality of bus bar disposal area portions and a second hinge portion connected to the other one of the plurality of bus bar disposal area portions, and the fastening portion may include a connection portion connected to the first hinge portion and the second hinge portion, and a support portion that forms an insertion space while being connected to both ends of the connection portion.

The plurality of bus bar disposal area portions may include: a first bus bar disposal area portion; a second bus bar disposal area portion disposed on one side of the first bus bar disposal area portion and stacked on the first bus bar disposal area portion by the hinge portion; and a third bus bar disposal area portion disposed on the other side of the first bus bar disposal area portion and stacked on the first bus bar disposal area portion by the hinge portion.

The second bus bar disposal area portion and the third bus bar disposal area portion may be spaced apart from each other in a state where the second bus bar disposal area portion and the third bus bar disposal area portion are stacked on the first bus bar disposal area portion.

The first bus bar disposal area portion, the second bus bar disposal area portion, and the third bus bar disposal area portion each may have an outline of a rectangle.

A bus bar assembly for a battery module according to another aspect of the present invention includes: the bus bar holder; and a bus bar disposed to each of the plurality of bus bar disposal area portions.

The bus bar may be over-molded to the plurality of bus bar disposal area portions.

A battery module according to another aspect of the present invention includes: a bus bar holder that includes a body including a plurality of bus bar disposal area portions, a hinge portion that is disposed between the plurality of bus bar disposal area portions and enables the plurality of bus bar disposal area portions to be stacked, and a fastening portion disposed adjacent to the hinge portion; a bus bar disposed in each of the plurality of bus bar disposal area portions; and a housing that accommodates a plurality of battery cells and is fixed to the fastening portion.

The housing may include a pair of side plates that are disposed facing each other, and the fastening portion may be fixed to the pair of side plates.

The hinge portion may include a first hinge portion connected to one of the plurality of bus bar disposal area portions and a second hinge portion connected to the other one of the plurality of bus bar disposal area portions, and the fastening portion may include a connection portion connected to the first hinge portion and the second hinge portion, and a support portion that forms an insertion space inserted into the side plate while being connected to both ends of the connection portion.

At least some of the above and other features of the invention are set out in the claims.

According to the embodiments of the present invention, the structure of the improved bus bar holder simplifies the manufacturing of the bus bar assembly with fewer parts.

Accordingly, it is possible to reduce the manufacturing cost of the battery module, and furthermore, it is possible to provide a high-quality battery module to consumers.

### BRIEF DESCRIPTION OF THE DRAWINGS

The features of the present invention will be clearly understood by a person of an ordinary skill in the technical field to which the present invention belongs through detailed descriptions of various embodiments with reference to the drawings described below.
FIG. 1 is a perspective view of a bus bar assembly according to an embodiment of the present invention.
FIG. 2 is an exploded perspective view of the bus bar assembly according to an embodiment of the present invention.
FIG. 3 is a side view of the bus bar assembly according to the embodiment of the present invention.
FIG. 4A to 4E are provided for description of an assembling process of the bus bar assembly according to the embodiment of the present invention.
FIG. 5 shows a battery module to which the bus bar assembly according to the embodiment of the present invention is applied.

### DETAILED DESCRIPTION OF THE EMBODIMENTS

Hereinafter, with reference to accompanying drawings, an embodiment of the present invention will be described in detail for a person of an ordinary skill to easily practice it in the technical field to which the present invention is included. The drawings and description are to be regarded as illustrative in nature and not restrictive. Like reference numerals designate like elements throughout the specification. In addition, in the accompanying drawings, some constituent elements are exaggerated, omitted, or schematically shown, and the size of each constituent element does not fully reflect the actual size.

The accompanying drawings are only for ease of understanding of the embodiments disclosed in this specification, and the technical idea disclosed in this specification is not limited by the accompanying drawing, and it should be understood that all changes, equivalents, or substitutes included in the scope of the present invention are included.

Terms including ordinal numbers such as first, second, and the like may be used to describe elements of various configurations, but the constituent elements are not limited by the terms. The terms are only used to distinguish one constituent element from another.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to mean positioned above or below the target element, and will not necessarily be understood to mean positioned "at an upper side" based on an opposite to gravity direction.

Throughout the specification, terms such as "include" or "have" are intended to designate the presence of features, numbers, steps, actions, constituent elements, parts, or combinations of these described in the specification, but it is to be understood that the possibility of the presence or addition of one or more other features, elements, numbers, steps, actions, constituent elements, parts, or combinations thereof is not preliminarily excluded. Therefore, when a part "comprises" a certain constituent element, this means that other constituent elements may be further included, rather than excluding other constituent elements, unless otherwise stated.

In addition, in the entire specification, when it is referred to as "on a plane", it means when an object is viewed from above, and when it is referred to as "on a cross-section", it is viewed from the side when the object is cut vertically.

In addition, the expression "connected to" in the entire specification not only means that two or more constituent elements are directly connected to, but also means that two or more constituent elements are indirectly connected through other constituent elements, physically connected to, or electrically connected, or being referred to by different names depending on the position or function, but is integral.

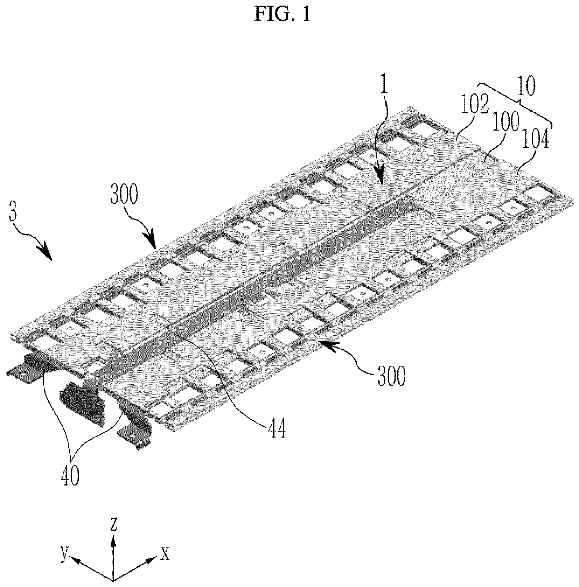

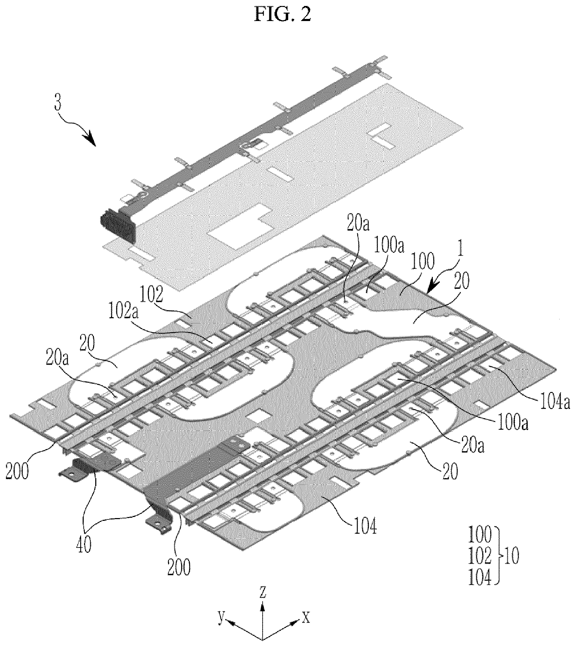

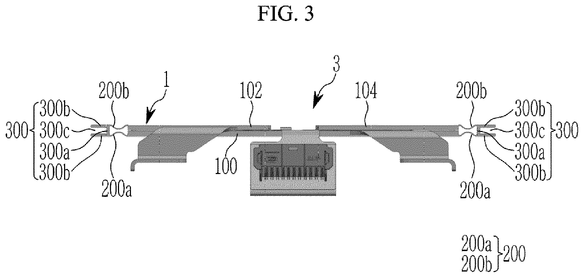

FIG. 1 is a perspective view of a bus bar assembly according to an embodiment of the present invention, FIG. 2 is an exploded perspective view of the bus bar assembly according to an embodiment of the present invention, and FIG. 3 is a side view of the bus bar assembly according to the embodiment of the present invention.

A bus bar assembly according to an embodiment is formed by fixing a bus bar to a bus bar holder. In addition, the bus bar assembly according to the embodiment is configured such that bus bars are arranged in a double layer, for example, in two layers. Such a bus bar assembly is provided to a battery module and electrically connects a plurality of rechargeable battery cells accommodated in a housing of the battery module.

As shown in FIG. 1 to FIG. 3, a bus bar holder 1 may include a resin material body 10 and includes a plurality of bus bar disposal area portions 100, 102, and 104 in which the bus bar 20 is disposed. A bus bar 20 is disposed in each of the bus bar disposal area portions 100, 102, and 104, and the number of bus bars 20 disposed in each bus bar disposal area 100, 102, and 104 may be properly adjusted according to the number of battery cells and an electrical connection relationship of the battery cells.

In addition, openings 100a, 102a, and 104a for exposing a terminal part of the bus bar 20 are arranged along one direction (e.g., a length direction of the body, x) in each of the bus bar disposal area portions 100, 102, and 104.

In the present embodiment, the bus bar holder 1 may be provided with three bus bar disposal area portions 100, 102, and 104. Each of the bus bar disposal area portions 100, 102, and 104 may have an outline of an approximate rectangle.

Among the three bus bar disposal area portions 100, 102, and 104, the first bus bar disposal area 100 disposed in a center has a larger size than the second and third bus bar disposal area portions 102 and 104. The second and third bus bar disposal area portions 102 and 104 disposed in the left and right while neighboring the first bus bar disposal area portion 100 have a smaller size than the first bus bar disposal area portion 100, and are connected with the first bus bar disposal area portion 100 so as to be able to be stacked on the first bus bar disposal area portion 100. Here, the size of the second bus bar disposal area portion 102 and the size of the third bus bar disposal area portion 104 may be the same.

Hinge portions 200 are disposed between the first bus bar disposal area portion 100 and the second bus bar disposal area portion 102, and between the first bus bar disposal area portion 100 and the third bus bar disposal area portion 104, for stacking of bus bar disposal area portions 100, 102, and 104.

In the present embodiment, the hinge portion 200 may have a thinner thickness than the bus bar disposal area portions 100, 102, and 104 to have flexibility. The hinge portion 200 may be formed of the same resin material as the body 10 and may be integrally formed with the bus bar disposal area portions 100, 102, and 104 through injection molding or the like. In addition, the hinge portion 200 may extend discontinuously along the length direction (x) of the body 10, and specifically may be disposed between the openings 100a, 102a, and 104a of the bus bar disposal area portions 100, 102, and 104 such that the first bus bar disposal area portion 100 and the second bus bar disposal area portion 102 may be connected and the first bus bar disposal area portion 100 and the third bus bar disposal area portion 104 may be connected.

By such a hinge portion 200, the second bus bar disposal area portion 102 and the third bus bar disposal area portion 104 in the unfolded state as shown in FIG. 2 may rotate 180 degrees toward the first bus bar disposal area portion 100 and may be stacked on the first bus bar disposal area portion 100. In such a stacked state, the opening 102a of the second bus bar disposal area portion 102 may overlap the opening 100a of the first bus bar disposal area portion 100, and the opening 104a of the third bus bar disposal area portion 104 may overlap the opening 100a of the first bus bar disposal area portion 100.

Meanwhile, a fastening portion 300 that can be used to fix the bus bar assembly to the housing of the battery module adjacent to the hinge portion 200 may be provided.

In the present embodiment, the hinge portion 200 may be divided into a first hinge portion 200a connected to the first bus bar disposal area portion 100 and a second hinge portion 200b connected to the second and third bus bar disposal area portions 102 and 104, and the fastening portion 300 may be formed by including a connection portion 300a disposed between the first hinge portion 200a and the second hinge portion 200b and connected thereto, and a support portion 300b extending vertically from both ends of the connection portion 300a with respect to the connection portion 300a to form an insertion space 300c therebetween.

The connection portion 300a and both support portions 300b that form the fastening portion 300 may have an appropriate thickness such that they can receive force when the components of the housing of the battery module are inserted into the insertion space 300c.

As shown in FIG. 1 and FIG. 3, when viewed in a state in which the second and third bus bar disposal area portions 102 and 104 are stacked on the first bus bar disposal area portion 100, the fastening portion 300 is disposed continuously along the length direction (x) of the body 10, that is, arranged opposite to each other on both edges of the first bus bar disposal area portion 100. In this case, both support portions 300b of the fastening portion 300 are disposed side by side in a form extending outwardly of the bus bar holder 1 such that the insertion space 300c may be maintained in an open state.

The bus bar holder 1 that can be configured as described above may be configured as the bus bar assembly 3 by disposing the bus bar 20 to each of the plurality of bus bar disposal area portions 100, 102, and 104. In the present embodiment, the bus bar holder 1 and the bus bar 20 may be formed to the bus bar assembly 3 through overmolding.

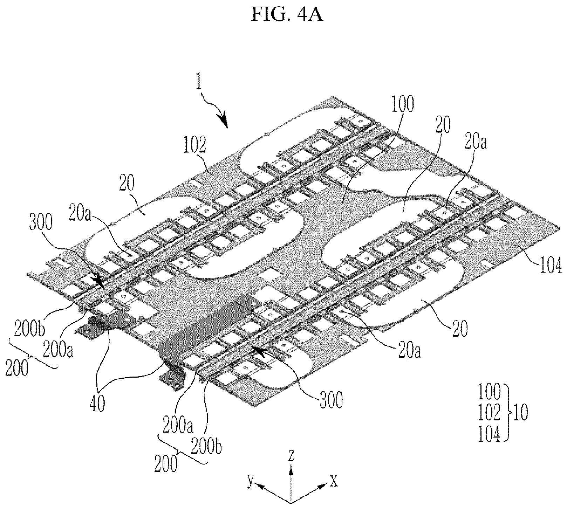

FIG. 4A to FIG. 4E are provided for description of an assembling process of the bus bar assembly according to the embodiment of the present invention.

The above-described bus bar holder 1 may be formed through injection molding. During the injection molding, the bus bar disposal area portions 100, 102, and 104 are over-molded with the corresponding bus bar 20. For example, five bus bars 20 are disposed and over-molded in the first bus bar disposal area portion 100, and two bus bars 20 are respectively over-molded in the second bus bar disposal area portion 102 and the third bus bar disposal area portion 104. In this case, the second bus bar disposal area portion 102 and the third bus bar disposal area portion 104 maintain an unfolded state, and a flexible print circuit 40 may be connected to some of the bus bars 20 disposed to the first bus bar disposal area portion 100 (refer to FIG. 4A).

When disposing the bus bar 20 to each of the bus bar disposal area portions 100, 102, and 104, the shape of the bus bar 20 is similar such that the bus bar 20 may not be disposed at the exact position of each bus bar disposal area portion 100, 102, and 104. In order to prevent this, a hole 20a is formed in a terminal portion of the bus bar 20, but the position and number of the holes 20a are designed differently for each bus bar 20 with a different shape to classify the bus bar 20, thereby identifying the bus bar 20 such that each bus bar 20 may be assembled to the exact position of each of the bus bar disposal area portions 100, 102, and 104. As such, the hole 20a provided in the bus bar 20 can be provided to workers as mistake-proofing to prevent misassembly.

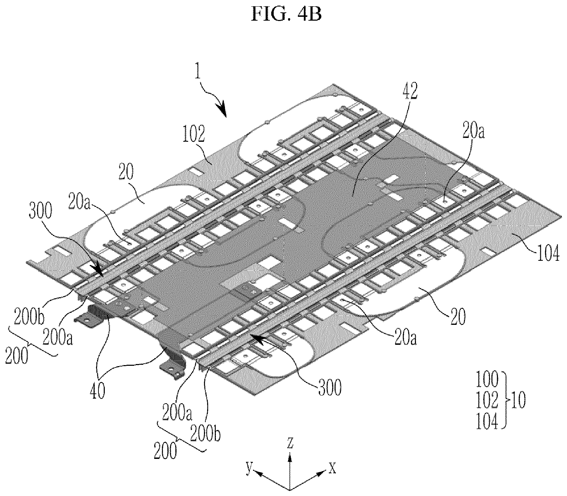

Next, an insulating sheet 42 may be disposed on the first bus bar disposal area portion 100 (refer to FIG. 4B). The insulating sheet 42 is for insulating between the bus bar 20 disposed in the plurality of bus bar disposal area portions 100, 102, and 104.

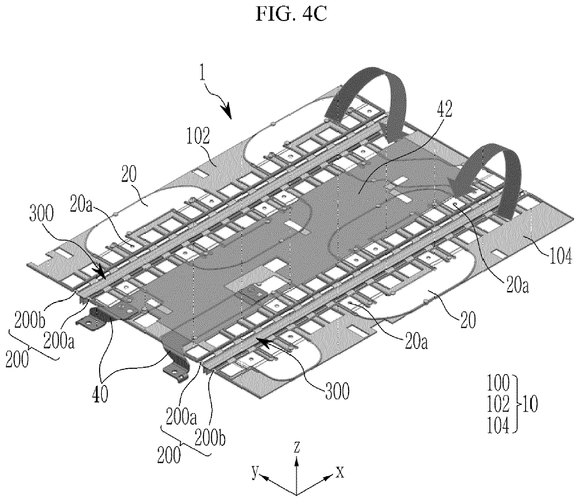

Next, the second bus bar disposal area portion 102 and the third bus bar disposal area portion 104 are folded and stacked on the first bus bar disposal area portion 100 by using the hinge portion 200 (refer to FIG. 4C).

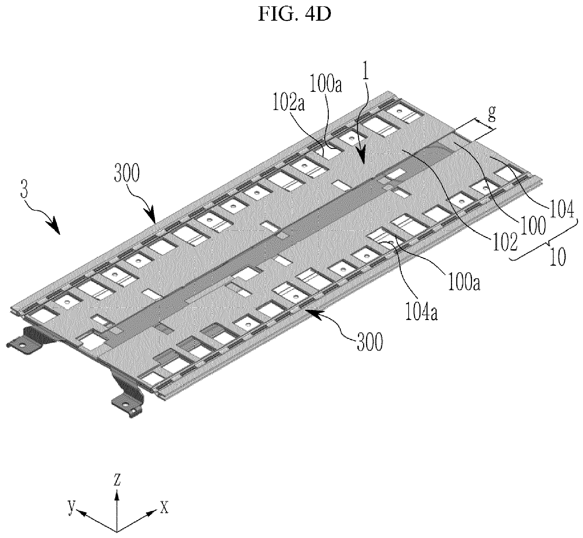

As shown in FIG. 4D, when the second bus bar disposal area portion 102 and the third bus bar disposal area portion 104 are each folded by the hinge portion 200 and the plurality of bus bar disposal area portions 100, 102, and 104 are stacked as a two-layer structure, the opening 102a of the second bus bar disposal area portion 102 overlaps the opening 100a of the first bus bar disposal area portion 100, and the opening 104a of the third bus bar disposal area portion 104 overlaps the opening 100a of the first bus bar disposal area portion 100. In addition, the second bus bar disposal area portion 102 and the third bus bar disposal area portion 104 are spaced apart at an arbitrary interval g.

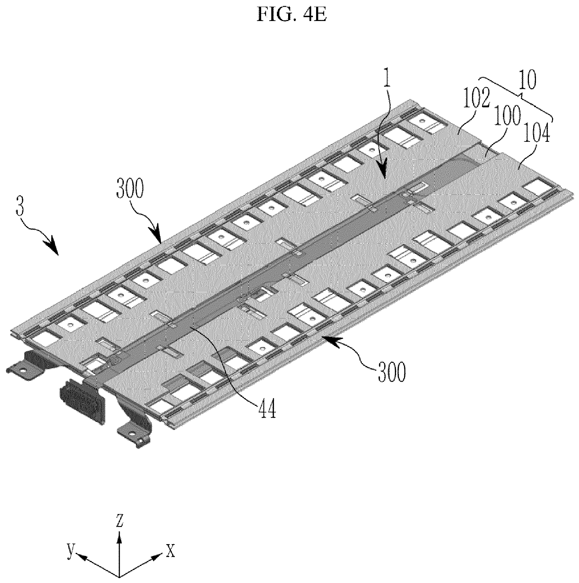

Next, another flexible print circuit, for example, a flexible print circuit 44 for sensing, is disposed between the second bus bar disposal area portion 102 and the third bus bar disposal area portion 104, and each bus bar 20 is electrically connected to the flexible printed circuit to complete the assembly of the bus bar assembly 3 (refer to FIG. 4E).

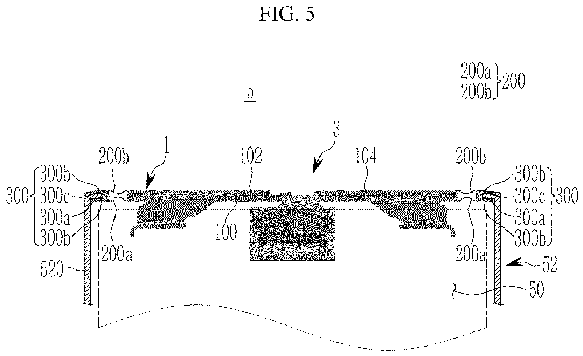

The assembled bus bar assembly 3 may be connected to the housing of the battery module. FIG. 5 shows a battery module 5 according to the embodiment of the present invention, and, as shown in FIG. 5, the bus bar assembly 3 may be disposed on the top of the housing 52 in which a plurality of battery cell (e.g., lithium rechargeable battery cell) arrays 50 are accommodated and connected to a side plate 520 of the housing 52.

The housing 52 may be formed by a combination of a pair of end plates (not shown) and a pair of side plates 520. In the present embodiment, the battery module 5 is formed by connecting the bus bar assembly 3 to the pair of side plates 520.

When viewing a coupling structure between the side plate 520 and the bus bar assembly 3 in detail, while the bus bar assembly 3 is provided above the battery cell array 50 accommodated in the housing 52, both fastening portions 300 of the bus bar holder 1 are positioned at the end of both sides of the housing 520. Here, the ends of both side plates 520 are inserted into the insertion space 300c of both fastening portions 300.

In this case, the insertion may be carried out by being forcibly fitted. With a fixing force generated in this case, the bus bar assembly 3 can be fixed to the housing 52, and the bus bar assembly 3 can also fix the battery cell array 50. The coupling between the fastening portion 300 and the housing 52 is not limited to the forcibly fitting method. For example, in a state in which the end of the side plate 520 is inserted into the insertion space 300c of the fastening part 300, the support portion 300b of the fastening portion 300 and the end of the side plate 520 may be fixed through welding.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

### <Description of symbols>

1: bus bar holder
3: bus bar assembly
5: battery module
100, 102, 104: bus bar disposal area portion
200: hinge portion
300: fastening portion

## Claims

1. A bus bar holder for a battery module, comprising:
a body that includes a plurality of bus bar disposal area portions; and
a hinge portion that is disposed between the plurality of bus bar disposal area portions to enable stacking of the plurality of bus bar disposal area portions.

2. The bus bar holder for a battery module of claim 1, wherein
the body and the hinge portion are integrally formed.

3. The bus bar holder for a battery module of claim 1 or claim 2, wherein
an opening that exposes a bus bar terminal portion is provided in each of the plurality of bus bar disposal area portions.

4. The bus bar holder for a battery module of claim 3, wherein
in a state in which the plurality of bus bar disposal area portions are stacked, each opening of the plurality of bus bar disposal area portions overlap.

5. The bus bar holder for a battery module of any one of claims 1 to 4, wherein
the hinge portion extends along a length direction of the body.

6. The bus bar holder for a battery module of any one of claims 1 to 5, wherein
a fastening portion for fixing the bus bar holder to a housing of the battery module adjacent to the hinge portion is provided.

7. The bus bar holder for a battery module of claim 6, wherein
the hinge portion and the fastening portion extend along a length direction of the body.

8. The bus bar holder for a battery module of claim 7, wherein
the hinge portion includes a first hinge portion connected to one of the plurality of bus bar disposal area portions and a second hinge portion connected to the other one of the plurality of bus bar disposal area portions, and
the fastening portion comprises a connection portion connected to the first hinge portion and the second hinge portion, and a support portion that forms an insertion space while being connected to both ends of the connection portion.

9. The bus bar holder for a battery module of claim 8, wherein
the plurality of bus bar disposal area portions comprise: a first bus bar disposal area portion; a second bus bar disposal area portion disposed on one side of the first bus bar disposal area portion and stacked on the first bus bar disposal area portion by the hinge portion; and a third bus bar disposal area portion disposed on the other side of the first bus bar disposal area portion and stacked on the first bus bar disposal area portion by the hinge portion.

10. The bus bar holder for a battery module of claim 9, wherein
the second bus bar disposal area portion and the third bus bar disposal area portion are spaced apart from each other in a state where the second bus bar disposal area portion and the third bus bar disposal area portion are stacked on the first bus bar disposal area portion, optionally wherein
the first bus bar disposal area portion, the second bus bar disposal area portion, and the third bus bar disposal area portion each have an outline of a rectangle.

11. A bus bar assembly for a battery module, comprising:
the bus bar holder of any one of claims 1 to 10; and
a bus bar disposed to each of the plurality of bus bar disposal area portions.

12. The bus bar assembly for a battery module of claim 11, wherein
the bus bar is over-molded to the plurality of bus bar disposal area portions.

13. A battery module comprising:
a bus bar holder that includes a body including a plurality of bus bar disposal area portions, a hinge portion that is disposed between the plurality of bus bar disposal area portions and enables the plurality of bus bar disposal area portions to be stacked, and a fastening portion disposed adjacent to the hinge portion;
a bus bar disposed in each of the plurality of bus bar disposal area portions; and
a housing that accommodates a plurality of battery cells and is fixed to the fastening portion.

14. The battery module of claim 13, wherein
the housing comprises a pair of side plates that are disposed facing each other, and the fastening portion is fixed to the pair of side plates.

15. The battery module of claim 14, wherein
the hinge portion includes a first hinge portion connected to one of the plurality of bus bar disposal area portions and a second hinge portion connected to the other one of the plurality of bus bar disposal area portions, and
the fastening portion comprises a connection portion connected to the first hinge portion and the second hinge portion, and a support portion that forms an insertion space into which the side plate is inserted while being connected to both ends of the connection portion.
